# EUROPÄISCHE PATENTSCHRIFT

(11) **EP 1 017 978 B1**
(45) Veröffentlichungstag und Bekanntmachung des Hinweises auf die Patenterteilung: **28.04.2004**
(21) Anmeldenummer: 99910116.5
(22) Anmeldetag: 10.02.1999
(51) Int. Cl.: G01M 3/16, G01B 13/10, G01B 21/14

(54) **VERFAHREN UND VORRICHTUNG ZUM VERMESSEN EINER DROSSELSTELLE**
METHOD AND DEVICE FOR MEASURING A THROTTLE POINT
PROCEDE ET DISPOSITIF DE MESURAGE D'UN POINT D'ETRANGLEMENT

(30) Priorität: 23.05.1998 DE 19823125
(43) Veröffentlichungstag der Anmeldung: 12.07.2000
(73) Patentinhaber: ROBERT BOSCH GMBH, 70442 Stuttgart (DE)
(72) Erfinder: MERZ, Harald, D-76547 Sinzheim (DE)
(86) Internationale Anmeldenummer: PCT/DE1999/000350
(87) Internationale Veröffentlichungsnummer: WO 1999/061876

(56) Entgegenhaltungen:
- WO-A-90/08299
- DE-A- 19 636 431
- US-A- 5 092 158

## Beschreibung

### Stand der Technik

Die Erfindung betrifft ein Verfahren und eine Vorrichtung zum Vermessen einer Drosselstelle nach der Gattung der unabhängigen Ansprüche.

Üblicherweise werden bei der Vermessung von Drosselstellen, insbesondere Bohrungen, Düsen oder Blenden, mechanische oder optische Meßmethoden benutzt, diese sind jedoch dann schwierig anzuwenden, wenn die zu vermessenden Drosselstellen sehr klein sind. Dies erfordert die Entwicklung neuer Verfahrensmethoden, wie sie z. B. aus der DE-OS 196 36 431 bekannt sind. Dabei geht es um ein Verfahren und eine Vorrichtung zur Prüfung der Funktionsfähigkeit einer Tankentlüftungsanlage, wobei das Verfahren auf folgendem Prinzip basiert: Mittels einer Druckquelle wird die Tankentlüftungsanlage mit Druck beaufschlagt, wobei der sich einstellende Druck im Behältnis proportional ist zu einer der Betriebskenngrößen der Pumpe. Weist das Behältnis bzw. die Tankentlüftungsanlage ein Leck auf, so stellt sich ein entsprechend anderer Druck ein, was sich folglich auch auswirkt auf eine der Betriebskenngrößen der Druckquelle, z.B. Strom, Spannung und/oder Drehzahl. Durch Erfassen dieser Betriebskenngrößen kann somit auf das Vorhandensein eines Lecks in dem Behältnis geschlossen werden. Durch Vergleich mit einem geeigneten Referenzleck kann dann entschieden werden, ob das detektierte Leck größer oder kleiner ist als das Referenzleck. Es findet eine qualitative Vermessung dieses Lecks statt, eine quantitative Bestimmung der Größe des Lecks ist dabei jedoch nicht möglich.

### Vorteile der Erfindung

Das erfindungsgemäße Verfahren mit den Merkmalen des Hauptanspruchs hat den Vorteil, daß sie nicht nur eine qualitative sondern auch eine quantitative Methode zum Vermessen einer Drosselstelle, insbesondere einer Bohrung, Düse, Blende oder eines Lecks darstellt. Durch das Erfassen und Speichern mindestens einer Betriebskenngröße der Pumpe und das zusätzliche Erfassen und Speichern mindestens zweier Referenzbetriebskenngrößen zweier Referenzdrosseln, erhält man die Möglichkeit, durch Vergleich der Betriebskenngröße mit den Referenzbetriebskenngrößen, die in einer Auswerteeinheit abgelegt werden können, eine quantitative Aussage zur Größe einer Drossel zu machen.

Durch die in den Unteransprüchen angegebenen Maßnahmen sind vorteilhafte Weiterentwicklungen des Verfahrens nach dem Hauptanspruch möglich.

So ist es von Vorteil, wenn mindestens eine Referenzbetriebskenngröße einer Referenzdrossel vor der zu vermessenden Drosselstelle ermittelt wird, weil dann vor der oder den eigentlichen Messungen eine Eichung, also die Zuordnung von Betriebskenngröße zu Drosselgröße, stattfinden kann, bzw. überprüft werden kann, ob sich das System in Bezug auf eine frühere Eichung verändert hat bzw. ob diese frühere Eichung noch verwendet werden kann.

Werden mindestens zwei Referenzbetriebskenngrößen vor der zu vermessenden Drosselstelle ermittelt, so ist es möglich, unmittelbar im Anschluß an die Messung der eigentlichen Drosselstelle deren Größe auszugeben und somit eine unmittelbare Aussage zu erhalten.

Wird das Verfahren im Rahmen von automatisierten Fertigungsprozessen eingesetzt, bei denen es auf eine möglichst hohe Stückzahl von an sich identischen Drosseln ankommt, so ist es von überaus großem Vorteil, wenn die Referenzbetriebskenngrößen einmalig erfaßt werden und dann zum Vergleich mehrerer zu vermessender Drosselstellen herangezogen werden. Damit kann deren Größe sehr schnell mit entsprechend hoher Zeitersparnis bestimmt werden, weil die Referenzdaten ja schon bekannt sind und somit das wechselweise Vermessen von Referenzdrossel und eigentlicher Drossel entfällt.

Das eigentliche physikalische Prinzip dieses Verfahrens beruht darauf, daß der Druck, der sich an einer Referenzdrossel einstellt, verglichen wird mit dem Druck, der sich an einer zu vermessenden Drosselstelle einstellt. Da die Erfassung des Drucks einen zusätzlichen technischen Aufwand darstellt, hat es sich, wie bekannt, als großer Vorteil erwiesen, wenn stattdessen die Betriebskenngrößen der Pumpe erfaßt werden, da zwischen diesen und dem sich einstellenden Druck in der Regel ein proportionaler Zusammenhang besteht. Die dafür in Frage kommenden Betriebskenngrößen einer Pumpe sind der durch die Pumpe fließende Strom, die an der Pumpe anliegende Spannung oder die Drehzahl der Pumpe. Um zu richtigen und reproduzierbaren Meßergebnissen zu gelangen, ist es natürlich sinnvoll, die Betriebskenngrößen erst dann zu erfassen, wenn sich ein konstanter Staudruck an der Referenzdrossel bzw. der zu vermessenden Drossel eingestellt hat.

Von Vorteil kann es auch sein, wenn das Verfahren so ausgeführt wird, daß die Referenzdrosseln in einem separaten Zweig der Meßanordnung vermessen werden können. Dadurch können Referenzdrosseln und zu vermessende Drosselstellen unabhängig voneinander ausgetauscht werden. Dies kann besonders dann von Vorteil sein, wenn die Größe einer zu vermessenden Drosselstelle von vorneherein nicht abgeschätzt werden kann und somit kein Gefühl für die Größe der idealerweise zu verwendenden Referenzdrosseln vorhanden ist. Kann man andererseits die Geometrie der zu vermessenden Drosselstellen schon einigermaßen einschätzen, und ist somit abzusehen, daß aufwendige Referenzmessungen entfallen können, so kann es durchaus von Vorteil sein, wenn die Referenzdrosseln am gleichen Ort wie die zu vermessenden Drosselstellen vermessen werden. Somit kann auf einen Umschaltmechanismus zwischen den entsprechenden Zweigen der Meßanordnung verzichtet werden.

Bei unterschiedlichen Geometrien von Referenzdrosseln und zu vermessenden Drosselstellen können Ungenauigkeiten im Ergebnis auftreten. Deswegen ist es vorteilhaft, wenn beim Auswerten entweder die Betriebskenngrößen oder die Referenzbetriebskenngrößen oder beide mit mindestens einem Korrekturfaktor und/oder einem Additionsterm korrigiert werden. Damit kann dieses Verfahren, welches durch eine Maschine mit einem bestimmten Satz von Referenzdrosseln realisiert wird, bei den unterschiedlichsten Geometrien verschiedener und zu vermessender Drosselstellen eingesetzt werden.

Die Ermittlung der Drosselgröße kann entweder über einen Mittelungsprozeß geschehen, oder über einen logischen Vergleich, oder dadurch, daß eine Kennlinie an die Referenzbetriebskenngrößen angepaßt wird. Letzteres ist deshalb vorteilhaft, weil damit die Genauigkeit des Verfahrens erhöht wird. Eine zusätzliche Erhöhung der Genauigkeit dieses Verfahrens erreicht man dadurch, daß man möglichst viele Referenzdrosseln vermißt.

Eine andere vorteilhafte Variante dieses Verfahrens besteht darin, daß die Auswertung der Meßergebnisse über eine in der Auswerteeinheit abgelegte Referenzkennlinie geschieht. Damit können eine Vielzahl von Drosselstellen vermessen werden, ohne explizit auf die Referenzdrosseln zurückgreifen zu müssen. Somit ist es auch vorteilhaft, wenn mehrere Referenzkennlinien in der Auswerteeinheit abgelegt sind, was es ermöglicht, problemlos und ohne vorherige Eichung auf unterschiedliche Geometrien von zu vermessenden Drosselstellen umzuschalten. Mit dieser Verfahrensvariante wird eine besonders nutzerfreundliche Form realisiert, bei der komplizierte und eventuell langwierige Eichmessungen entfallen können.

Zur Realisierung des beanspruchten Verfahrens sind verschiedene Ausführungsformen einer entsprechenden Vorrichtung denkbar. Besonders erstrebenswert und damit auch besonders vorteilhaft ist eine Vorrichtung, bei der die Berechnung und die Ausgabe der Drosselgröße möglichst schnell und automatisiert abläuft. So ist denkbar, daß neben der obligatorischen zweiten Referenzdrossel zur quantitativen Bestimmung der zu vermessenden Drosselstelle eine Auswerteeinheit vorhanden ist, die mindestens einen Speicher zur Aufnahme der Betriebskenngrößen sowie Speicher zur Aufnahme der Referenzbetriebskenngrößen beinhaltet. Auf der Grundlage dieser abgespeicherten Werte kann dann mittels eines Logikbausteins die Drosselstellengröße berechnet werden. Dieser Logikbaustein muß also mit den Speichern verbunden sein, genauso wie er mit einer Ausgabeeinrichtung zur Ausgabe des berechneten Ergebnisses verbunden sein muß.

Weiterhin ist es vorteilhaft, wenn ein Speicher zur Ablage der Referenzkennlinien vorhanden ist.

Die Verwendung einer Flügelzellenpumpe ist besonders vorteilhaft, weil bei diesen Pumpen ein sehr genauer Zusammenhang zwischen Druck und Betriebskenngrößen, insbesondere dem Strom, der durch den Motor der Pumpe fließt, besteht. Durch diesen genauen Zusammenhang erreicht man eine entsprechend hohe Meßgenauigkeit.

Zur Umschaltung auf mindestens einen mit Fluid unter Druck beaufschlagbaren Zweig der Meßanordnung kommen unterschiedlichste Ventile in Frage. Als vorteilhaftes Umschaltmittel haben sich Magnetventile erwiesen.

Äußerst vorteilhaft ist außerdem, wenn die Daten, die der Auswerteeinheit zugeführt werden, in digitalisierter Form vorliegen. Dies erreicht man durch geeignete AD-Wandler, wodurch der weitere Vorteil gewonnen wird, daß der komplett erfaßte Datensatz anderen auf digitaler Basis arbeitenden Maschinen zur Verfügung gestellt werden kann.

### Zeichnung

In der Zeichnung sind drei Ausführungsbeispiele der erfindungsgemäßen Vorrichtung dargestellt und in der nachfolgenden Beschreibung näher erläutert. Es zeigen Figur 1 eine schematische und den logischen Ablauf des Verfahrens beinhaltende Darstellung eines ersten Ausführungsbeispiels, Figur 2 ein weiteres Ausführungsbeispiel, bei dem auf die Darstellung der Auswerteeinheit sowie der Ausgabeeinheit verzichtet wurde, und Figur 3 lediglich die Auswerteeinheit mit einem Analogdigitalwandler, der als zusätzliches Element der Auswerteeinheit vorgeschaltet ist, als Teil eines dritten Ausführungsbeispiels.

### Beschreibung

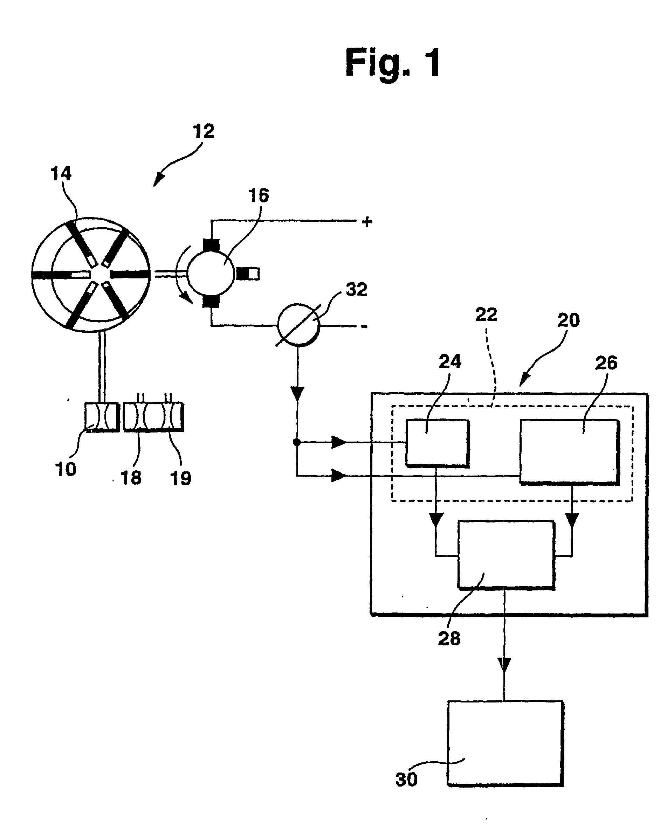

Das in Figur 1 dargestellte erste Ausführungsbeispiel weist eine Drosselstelle 10 sowie eine Pumpe 12 auf, welche aus einem elektrischen Motor 16 und einer Verdichtereinheit 14 besteht. Außerdem sind mindestens zwei Referenzdrosseln 18, 19 vorgesehen, die an gleicher Stelle wie die Drosselstelle 10 mit der Pumpe 12 in Verbindung stehen. Diese eine Verbindung ist so ausgeführt, daß sie den Druckverhältnissen entsprechend eine möglichst hohe Dichtigkeit aufweist. Ideal sind beispielsweise Schraubflanschverbindungen, es eignen sich aber auch simple Schlauchverbindungen.

Weiterhin ist eine die Betriebskenngrößen der Pumpe 12 erfassende Meßeinrichtung 32 an den Motor 16 der Pumpe 12 angeschlossen. Mit der Meßeinrichtung 32 ist eine Auswerteeinheit 20 verbunden, die wiederum aus mehreren Komponenten besteht. Sie beinhaltet einen ersten Speicher 24, der die Betriebskenngrößen aufnimmt, und einen zweiten Speicher 26, der die Referenzbetriebskenngrößen aufnimmt. Außerdem enthält die Auswerteeinheit 20 einen Logikbaustein 28, der mit dem ersten Speicher 24 und dem zweiten Speicher 26 verbunden ist. Die beiden Speicher 24, 26 können in einer alternativen Ausführungsform auch zu einem einzigen Speicher 22 zusammengefaßt sein. Entscheidend ist lediglich, daß die zur Ermittlung der Drosselgröße notwendigen Daten abgelegt und gespeichert werden können. Darüber hinaus muß die Auswerteeinheit 20 es ermöglichen, daß an die im Speicher 26 abgelegten Referenzbetriebskenngrößen eine Referenzkennlinie angepaßt wird, die ebenfalls im Speicher 26 abgelegt werden soll.

Die ganze Auswertung ist natürlich auch einfacher zu realisieren, indem beispielsweise die Betriebskenngrößen von einer die Maschine bedienenden Person abgelesen und die weitere Auswertung von dieser Person durchgeführt wird.

An die Auswerteeinheit 20 ist weiterhin eine Ausgabeeinrichtung 30 zur Ausgabe der von der Auswerteeinheit 20 ermittelten Drosselstellengröße angeschlossen.

Der Speicher 24 zur Aufnahme der Referenzbetriebskenngrößen soll so ausgeführt sein, daß die Referenzbetriebskenngrößen als Kennlinie oder Kennlinienfeld abgelegt werden können.

Das Verdichterteil 14 der Pumpe 12 ist in Figur 1 als Flügelzellenverdichter dargestellt, womit zum Ausdruck gebracht werden soll, daß sich eine Flügelzellenpumpe für das mit der Vorrichtung durchzuführende Verfahren besonders gut eignet.

Mit dem in Figur 1 dargestellten ersten Ausführungsbeispiel läßt sich das beanspruchte Verfahren folgendermaßen durchführen. Die Drosselstelle 10 wird mit einem Fluid unter Druck mittels einer Pumpe 12 beaufschlagt, wobei Druck nicht notwendigerweise nur Überdruck sondern auch Unterdruck bedeuten kann, und mindestens eine Betriebskenngröße der Pumpe 12 wird erfaßt und gespeichert. Durch das Erfassen und Speichern mindestens zweier Referenzbetriebskenngrößen zweier Referenzdrosseln 18, 19 erhält man die Möglichkeit, die gemessene mindestens eine Betriebskenngröße mit den Referenzbetriebskenngrößen in einer Auswerteeinheit 20 zu vergleichen, damit die Größe der Drosselstelle 10 zu ermitteln und diese mit der Ausgabeeinrichtung 30 auszugeben.

Durch die Verwendung nicht nur einer, sondern mindestens zweier Referenzdrosseln 18, 19 erhält man also die Möglichkeit eine quantitative Aussage zur Größe der zu vermessenden Drosselstelle 10 zu treffen. Mit dem in Figur 1 dargestellten ersten Ausführungsbeispiel einer Vorrichtung läßt sich das Verfahren so durchführen, daß die Referenzdrosseln 18, 19 und die Drosselstelle 10 in beliebiger Reihenfolge vermessen werden können. Insbesondere kann die Referenzbetriebskenngröße einer Referenzdrossel 18 vor der zu vermessenden Drosselstelle 10 ermittelt werden.

Die erfaßten und gespeicherten Referenzbetriebskenngrößen der Referenzdrosseln 18, 19 können dann auch zum Vergleich der Betriebskenngrößen mehrerer zu vermessender Drosselstellen 10 herangezogen werden.

Als die zu erfassenden Betriebskenngrößen der Pumpe 12 bieten sich folgende Größen an:

Der Strom, der durch die Pumpe 12 antreibenden Motor 16 fließt, die am Motor 16 anliegende Spannung oder die Drehzahl des Motors 16 und eine beliebige Kombination dieser drei Größen. Um mit den erfaßten Betriebskenngrößen die Größe einer Drosselstelle 10 möglichst genau zu ermitteln, ist es nötig, diese erst dann zu erfassen, wenn sich ein konstanter Staudruck an der Drosselstelle 10 eingestellt hat. Die so erfaßten Daten werden nun der Auswerteeinheit 20 zugeführt, und in den für sie vorgesehenen Speichern 24, 26 abgelegt. Der Logikbaustein 28 greift auf diese beiden Speicher zu und kombiniert die darin abgelegten Daten derart, daß damit die Größe der zu vermessenden Drosselstelle 10 ermittelt und mit der Ausgabeeinrichtung 30 ausgegeben werden kann. Die Kombination der Daten kann auf verschiedenen Wegen erfolgen. So kann der Logikbaustein 28 einen Mittelungsprozeß durchführen, er kann die Drosselstellengröße über einen logischen Vergleich bestimmen, oder er kann eine Kennlinie an die Referenzbetriebskenngrößen anpassen und durch Interpolation oder Extrapolation dieser Kennlinie auf die Größe der Drosselstelle 10 schließen.

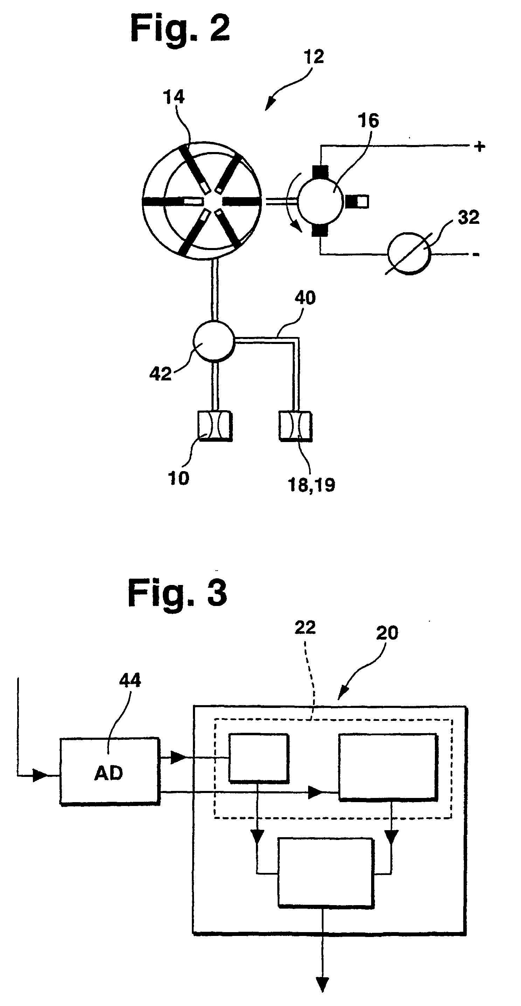

In Figur 2 ist ein zweites Ausführungsbeispiel skizziert, wobei die komplette Auswerteeinheit 20 und die Ausgabeeinrichtung 30 nicht dargestellt sind. Zum ersten Ausführungsbeispiel gleiche Teile weisen die gleichen Bezugszahlen auf. Das zweite Ausführungsbeispiel unterscheidet sich von dem ersten Ausführungsbeispiel im wesentlichen dadurch, daß ein Verdichterteil 14 als Teil der Pumpe 12 über ein Magnetventil 42 wahlweise verbunden werden kann mit der zu vermessenden Drosselstelle 10 oder über einen Zweig 40 mit den Referenzdrosseln 18, 19.

Damit ergibt sich eine weitere Verfahrensvariante, weil mit dem Magnetventil 42 zwischen der Messung der Drosselstelle 10 und der Messung der beiden Referenzdrosseln 18, 19 umgeschaltet werden kann.

Mit beiden Ausführungsbeispielen aus Figur 1 und Figur 2 läßt sich noch eine andere Verfahrensvariante durchführen, die sich dadurch auszeichnet, daß schon existierende Referenzkennlinien, d. h. Referenzkennlinien, die nicht unmittelbar vom jeweiligen Nutzer des Verfahrens erstellt wurden, in einem der Speicher 24 oder 26 der Auswerteeinheit 20 abgelegt werden und mit diesen Referenzkennlinien ohne vorheriges Ausmessen von Referenzdrosseln 18, 19 die Größe von Drosselstellen 10 bestimmt werden.

In allen bisher geschilderten Verfahrensvarianten können Korrekturmechanismen berücksichtigt werden, die unterschiedlichen Geometrien der zu vermessenden Drosselstellen 10 Rechnung tragen. Diese Korrekturmechanismen werden ebenfalls in einem der Speicher 24 oder 26 abgelegt und können entweder Korrekturfaktoren und/oder Additionsterme bzw. auch mehrere Referenzkennlinien sein.

In Figur 3 ist ein Analogdigitalwandler 44 dargestellt, der als zusätzliches Element der Auswerteeinheit 20 vorgeschaltet ist. Damit ergibt sich eine weitere Verfahrensvariante, welche die Digitalisierung sämtlicher Eingangsdaten ermöglicht.

## Patentansprüche

1. Verfahren zum Vermessen einer Drosselstelle (10) mit mindestens folgenden Schritten:
Beaufschlagung der Drosselstelle (10) mit einem Fluid unter Druck mittels einer Pumpe (12), Erfassen und Speichern mindestens einer Betriebskenngröße der Pumpe (12), Erfassen und Speichern mindestens zweier Referenzbetriebskenngrößen zweier Referenzdrosseln (18, 19), Vergleichen der Betriebskenngrößen mit den Referenzbetriebskenngrößen in einer Auswerteeinheit (20) und Ausgeben der Drosselgröße.

2. Verfahren nach Anspruch 1, **dadurch gekennzeichnet, daß** mindestens eine Referenzbetriebskenngröße einer Referenzdrossel (18) vor der zu vermessenden Drosselstelle (10) ermittelt wird.

3. Verfahren nach einem der Ansprüche 1 oder 2, **dadurch gekennzeichnet, daß** die erfaßten und gespeicherten Referenzbetriebskenngrößen der Referenzdrosseln (18, 19) zum Vergleich der Betriebskenngrößen mehrerer separat zu vermessender Drosselstellen (10) herangezogen werden.

4. Verfahren nach einem der Ansprüche 1 bis 3, **dadurch gekennzeichnet, daß** als Betriebskenngrößen der durch einen die Pumpe (12) antreibenden Motor (16) fließende Strom, und/oder die am Motor (16) anliegende Spannung, und/oder die Drehzahl des Motors (16) erfaßt wird.

5. Verfahren nach einem der Ansprüche 1 bis 4, **dadurch gekennzeichnet, daß** die Betriebskenngrößen dann erfaßt werden, wenn sich ein konstanter Staudruck eingestellt hat.

6. Verfahren nach einem der vorhergehenden Ansprüche, **dadurch gekennzeichnet, daß** die Referenzdrosseln (18, 19) in mindestens einem eigens mit Fluid unter Druck beaufschlagbaren Zweig (40) der Meßanordnung angeordnet sind, und daß zum Ermitteln der Referenzbetriebskenngrößen auf diesen Zweig (40) umgeschaltet wird.

7. Verfahren nach einem der Ansprüche 1 bis 5, **dadurch gekennzeichnet, daß** die Referenzdrosseln (18, 19) am gleichen Ort wie die zu vermessenden Drosselstellen (10) vermessen werden.

8. Verfahren nach einem der vorhergehenden Ansprüche, **dadurch gekennzeichnet, daß** beim Auswerten die Betriebskenngrößen und/oder die Referenzbetriebskenngrößen mit mindestens einem Korrekturfaktor und/oder Additionsterm korrigiert werden, der den unterschiedlichen Geometrien von Referenzdrosseln (18, 19) und zu vermessenden Drosselstellen (10) Rechnung trägt.

9. Verfahren nach Anspruch 1, **dadurch gekennzeichnet, daß** in der Auswerteeinheit (20) eine Kennlinie an die Referenzbetriebskenngrößen angepaßt wird, und mit dieser die Größe der zu vermessenden Drosselstelle (10) ermittelt wird.

10. Verfahren zum Vermessen einer Drosselstelle (10) mit mindestens folgenden Schritten:
Beaufschlagung der Drosselstelle (10) mit einem Fluid unter Druck mittels einer Pumpe (12), Erfassen und Speichern einer Betriebskenngröße der Pumpe (12), Zuführung der Betriebskenngröße zu einer Auswerteeinheit (20), Vergleichen der Betriebskenngröße mit mindestens einer in der Auswerteeinheit (20) abgelegten Referenzkennlinie, die einen Zusammenhang zwischen Betriebskenngröße und Drosselgröße wiedergibt, und Ausgeben der Drosselgröße.

11. Verfahren nach Anspruch 10, **dadurch gekennzeichnet, daß** mehrere Referenzkennlinien in der Auswerteeinheit (20) abgelegt sind, die unterschiedlichen Geometrien der zu vermessenden Drosselstellen (10) Rechnung tragen.

12. Vorrichtung zum Vermessen einer Drosselstelle (10) mit einer Pumpe (12), einer Meßeinrichtung (32) zur Erfassung mindestens einer Betriebskenngröße der Pumpe (12), einer Auswerteeinheit (20) und einer Referenzdrossel (18) **dadurch gekennzeichnet, daß** mindestens eine zweite Referenzdrossel (19) vorgesehen ist, daß ferner die Auswerteeinheit (20) mindestens einen ersten Speicher (24) zur Aufnahme der Betriebskenngrößen und einen zweiten Speicher (26) zur Aufnähme der Referenzbetriebskenngrößen sowie einen die Drosselstellengröße berechnenden Logikbaustein (28) aufweist, der mit den Speichern (24, 26) und einer Ausgabeeinrichtung (30) verbunden ist.

13. Vorrichtung nach Anspruch 12, **dadurch gekennzeichnet, daß** im Speicher (24) zur Aufnahme der Referenzbetriebskenngrößen die Referenzbetriebskenngrößen als Kennlinie oder Kennlinienfeld abgelegt sind.

14. Vorrichtung nach einem der Ansprüche 12 oder 13, **dadurch gekennzeichnet, daß** die Pumpe (12) von einem elektrischen Motor (16) angetrieben wird und zusammen mit dem Verdichterteil (14) eine Flügelzellenpumpe bildet.

15. Vorrichtung zum Durchführen des Verfahrens nach Anspruch 6 und nach einem der Ansprüche 12 bis 14, **dadurch gekennzeichnet, daß** zur Umschaltung auf mindestens einen mit Fluid unter Druck beaufschlagbaren Zweig (40) der Meßanordnung Magnetventile (42) vorgesehen sind.

16. Vorrichtung nach Anspruch 12, **dadurch gekennzeichnet, daß** die Meßeinrichtung und/oder die Auswerteeinheit (20) AD-Wandler (44) zur Digitalisierung der Betriebskenngrößen aufweisen.

## Claims

1. Method for measuring a throttle point (10) having at least the following steps:
a pressurized fluid is applied to throttle point (10) by means of a pump (12), at least one operating characteristic variable of the pump (12) is sensed and stored, at least two reference operating characteristic variables of two reference throttles (18, 19) are sensed and stored, the operating characteristic variables are compared with the reference operating characteristic variables in an evaluation unit (20) and the throttle variable is output.

2. Method according to Claim 1, **characterized in that** at least one reference operating characteristic variable of a reference throttle (18) is determined upstream of the throttle point (10) to be measured.

3. Method according to one of Claims 1 or 2, **characterized in that** the sensed and stored reference operating characteristic variables of the reference throttles (18, 19) are used for comparing the operating characteristic variables of a plurality of throttle points (10) which are to be measured separately.

4. Method according to one of Claims 1 to 3, **characterized in that** the current flowing through a motor (16) which drives the pump (12) and/or the voltage applied to the motor (16) and/or the rotational speed of the motor (16) are sensed as operating characteristic variables.

5. Method according to one of Claims 1 to 4, **characterized in that** the operating characteristic variables are sensed whenever a constant ram pressure has been set.

6. Method according to one of the preceding claims, **characterized in that** the reference throttles (18, 19) are arranged in at least one branch (40) of the measuring arrangement to which pressurized fluid can be applied specifically, and **in that** the system is switched over to this branch (40) in order to determine the reference characteristic variables.

7. Method according to one of Claims 1 to 5, **characterized in that** the reference throttles (18, 19) are measured at the same location as the throttle points (10) to be measured.

8. Method according to one of the preceding claims, **characterized in that** during the evaluation the operating characteristic variables and/or the reference operating characteristic variables are corrected with at least one correction factor and/or addition term which allows for the different geometries of reference throttles (18, 19) and throttle points (10) to be measured.

9. Method according to Claim 1, **characterized in that**, in the evaluation unit (20), a characteristic curve is adapted to the reference operating characteristic variables and is used to determine the magnitude of the throttle point (10) to be measured.

10. Method for measuring a throttle point (10) having at least the following steps:
a pressurized fluid is applied to the throttle point (10) by means of a pump (12), an operating characteristic variable of the pump (12) is sensed and stored, the operating characteristic variable is fed to an evaluation unit (20), the operating characteristic variable is compared with at least one reference characteristic curve which is stored in the evaluation unit (20) and represents a relationship between the operating characteristic variable and throttle variable, and the throttle variable is output.

11. Method according to Claim 10, **characterized in that** a plurality of reference characteristic curves which allow for different geometries of the throttle points (10) to be measured are stored in the evaluation unit (20).

12. Device for measuring a throttle point (10) having a pump (12), a measuring device (32) for sensing at least one operating characteristic variable of the pump (12), an evaluation unit (20) and a reference throttle (18), **characterized in that** at least a second reference throttle (19) is provided, **in that** in addition the evaluation unit (20) has at least a first memory (24) for recording the operating characteristic variables, and a second memory (26) for recording the reference operating characteristic variables as well as a logic module (28) which calculates the throttle point variable and is connected to the memories (24, 26) and to an output device (30).

13. Device according to Claim 12, **characterized in that** the reference operating characteristic variables are stored as a characteristic curve or characteristic curve diagram in the memory (24) for recording the reference operating characteristic variables.

14. Device according to one of Claims 12 or 13, **characterized in that** the pump (12) is driven by an electric motor (16) and forms, together with the compressor part (14), a vane cell pump.

15. Device for carrying out the method according to Claim 6 and according to one of Claims 12 to 14, **characterized in that** solenoid valves (42) are provided for switching over to at least one branch (40) of the measuring arrangement to which branch pressurized fluid can be applied.

16. Device according to Claim 12, **characterized in that** the measuring device and/or the evaluation device (20) have A/D converters (44) for digitizing the operating characteristic variables.

## Revendications

1. Procédé pour mesurer un point d'étranglement (10) comportant au moins les étapes suivantes : alimenter le point d'étranglement (10) en fluide sous pression à l'aide d'une pompe (12), relever et enregistrer au moins une grandeur caractéristique de fonctionnement de la pompe (12), relever et enregistrer au moins deux grandeurs caractéristiques de fonctionnement de référence pour deux restricteurs de référence (18, 19), comparer dans une unité d'exploitation (20) les grandeurs caractéristiques de fonctionnement aux grandeurs caractéristiques de fonctionnement de référence et afficher la grandeur du restricteur.

2. Procédé selon la revendication 1,
**caractérisé en ce que**
l'on établit au moins une grandeur caractéristique de fonctionnement de référence pour un restricteur de référence (18) en amont du point d'étranglement (10) à mesurer.

3. Procédé selon l'une des revendications 1 ou 2,
**caractérisé en ce que**
l'on a recours aux grandeurs caractéristiques de fonctionnement de référence relevées et enregistrées pour les restricteurs de référence (18, 19) afin de comparer les grandeurs caractéristiques de fonctionnement pour plusieurs points d'étranglement (10) à mesurer séparément.

4. Procédé selon l'une des revendications 1 à 3,
**caractérisé en ce que**
en tant que grandeurs caractéristiques de fonctionnement, on relève le courant qui circule à travers un moteur (16) entraîné par la pompe (12) et/ou la tension appliquée au moteur (16) et/ou le régime du moteur (16).

5. Procédé selon l'une des revendications 1 à 4,
**caractérisé en ce que**
les grandeurs caractéristiques de fonctionnement sont relevées lorsqu'on a obtenu une pression dynamique constante.

6. Procédé selon l'une des revendications précédentes,
**caractérisé en ce que**
les restricteurs de référence (18, 19) sont disposés dans au moins une branche (40) - qu'on peut alimenter individuellement en fluide sous pression - de l'arrangement de mesure et l'on bascule sur cette branche (40) pour établir les grandeurs caractéristiques de fonctionnement.

7. Procédé selon l'une des revendications 1 à 5,
**caractérisé en ce que**
les restricteurs de référence (18, 19) sont mesurés au même endroit que les points d'étranglement (10) à mesurer.

8. Procédé selon l'une des revendications précédentes,
**caractérisé en ce que**
les grandeurs caractéristiques de fonctionnement et/ou les grandeurs caractéristiques de fonctionnement de référence sont corrigées lors de l'exploitation à l'aide d'au moins un facteur de correction et/ou un terme d'addition qui prend en compte les géométries différentes des restricteurs de référence (18, 19) et des points d'étranglement (10) à mesurer.

9. Procédé selon la revendication 1,
**caractérisé en ce que**
dans l'unité d'exploitation (20) une courbe caractéristique est ajustée aux grandeurs caractéristiques de fonctionnement de référence et grâce à elle la grandeur du point d'étranglement (10) à mesurer est établie.

10. Procédé pour mesurer un point d'étranglement (10) comportant au moins les étapes suivantes :
- alimenter le point d'étranglement (10) en fluide sous pression à l'aide d'une pompe (12),
- relever et enregistrer au moins une grandeur caractéristique de fonctionnement de la pompe (12),
- acheminer la grandeur caractéristique de fonctionnement à une unité d'exploitation (20),
- comparer la grandeur caractéristique de fonctionnement à au moins une courbe caractéristique de référence qui est mémorisée dans l'unité d'exploitation (20) et qui fait apparaître une relation entre la grandeur caractéristique de fonctionnement et la grandeur de restricteur, et
- afficher la grandeur de restricteur.

11. Dispositif selon la revendication 10,
**caractérisé en ce que**
l'on mémorise dans l'unité d'exploitation (20) plusieurs courbes caractéristiques de référence qui prennent en compte les géométries différentes des points d'étranglement (10) à mesurer.

12. Dispositif pour mesurer un point d'étranglement (10) comportant une pompe (12), une installation de mesure (32) destinée à mesurer au moins une grandeur caractéristique de fonctionnement de la pompe (12), une unité d'exploitation (20) et un restricteur de référence (18),
**caractérisé en ce qu'**
on prévoit au moins un deuxième restricteur de référence (19), l'unité d'exploitation (20) présente en outre au moins une première mémoire (14) pour enregistrer les grandeurs caractéristiques de fonctionnement et une deuxième mémoire (26) pour enregistrer les grandeurs caractéristiques de fonctionnement de référence ainsi qu'un composant logique (28) qui calcule la grandeur des points d'étranglement et qui est relié aux mémoires (24, 26) et à une unité d'affichage (30).

13. Dispositif selon la revendication 12,
**caractérisé en ce que**
dans la mémoire (24) destinée à enregistrer les grandeurs caractéristiques de fonctionnement de référence, les grandeurs caractéristiques de fonctionnement de référence sont stockées en tant que courbe caractéristique ou que famille de caractéristiques.

14. Dispositif selon l'une des revendications 12 ou 13,
**caractérisé en ce que**
la pompe (12) est entraînée par un moteur électrique (16) et forme une pompe à cellules semi-rotative conjointement avec la partie de compression (14).

15. Dispositif pour exécuter le procédé selon la revendication 6 et selon l'une des revendications 12 à 14,
**caractérisé en ce que**
l'on prévoit des vannes magnétiques (42) pour basculer sur au moins une branche (40) de l'arrangement de mesure qu'on peut alimenter en fluide sous pression.

16. Dispositif selon la revendication 12,
**caractérisé en ce**
**que** l'arrangement de mesure et/ou l'unité d'exploitation (20) présentent des convertisseurs analogiques / numériques (44) destinés à numériser les grandeurs caractéristiques de fonctionnement.
